(19)

Europäisches Patentamt

European Patent Office

Office européen des brevets

(11) **EP 4 484 493 A1**

(12) **EUROPEAN PATENT APPLICATION**

(43) Date of publication:
**01.01.2025 Bulletin 2025/01**

(21) Application number: **24184194.9**

(22) Date of filing: **25.06.2024**

(51) International Patent Classification (IPC):
**C08L 23/08** (2006.01)     **C08L 53/02** (2006.01)
**C08L 23/10** (2006.01)

(52) Cooperative Patent Classification (CPC):
(C-Sets available)
**C08L 23/0815; C08L 23/10;** C08L 2205/03   (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.06.2023   US 202363510924 P**

(71) Applicants:
• **Kraton Polymers Nederland B.V.**
  **1322 CE Almere (NL)**
• **DL Chemical Co., Ltd.**
  **Seoul 03181 (KR)**

(72) Inventors:
• **CHOI, Jae Ho**
  **Seoul 03181 (KR)**
• **KANG, Kyoung Seok**
  **Seoul 03181 (KR)**
• **KIM, Young Dae**
  **Seoul 03181 (KR)**
• **YOO, Yong Sub**
  **Seoul 03181 (KR)**
• **HONG, Sung Ho**
  **Seoul 03181 (KR)**
• **DHARMARAJAN, Raja**
  **Houston, Texas 77084 (US)**

(74) Representative: **Henkel & Partner mbB**
**Patentanwaltskanzlei, Rechtsanwaltskanzlei**
**Maximiliansplatz 21**
**80333 München (DE)**

(54) **IMPACT MODIFIER COMPOSITIONS**

(57)     An impact modifier composition (IMC) is disclosed comprising (a) a polyolefin plastomer (POP), and (b) at least one block copolymer. The POP has a density of 0.870 to 0.920 g/cm$^3$, a MFI of 0.5 to 30 g/10 minutes at 190°C/2.16 kg, a melt index ratio of 10 to 22, and a long chain branching (LCB) of < 15 LCB/10$^6$ carbons. The at least one block copolymer is selected from (i) a first hydrogenated styrenic block copolymer (first HSBC), (ii) a second hydrogenated styrenic block copolymer (second HSBC), and (iii) at least one multi-arm block copolymer (MABC). Each first HSBC and second HSBC has a polystyrene content (PSC) of 3 to 20 wt.%, and 15 to 30 wt.%, respectively. The impact modifier composition can be used in polyolefin compositions to improve impact resistance and a balance of other mechanical properties.

EP 4 484 493 A1

(52) Cooperative Patent Classification (CPC): (Cont.)

C-Sets
**C08L 23/0815, C08L 15/00;**
**C08L 23/0815, C08L 53/025;**
**C08L 23/10, C08L 23/0815, C08L 15/00,**
**C08K 3/346;**
**C08L 23/10, C08L 23/0815, C08L 53/025,**
**C08K 3/346**

**Description**

**FIELD**

The disclosure relates to impact modifier compositions, methods of preparation, and applications thereof.

**BACKGROUND**

Various impact modifier compositions have been used to improve the mechanical properties of polymer compositions, particularly polyolefin-based compositions. Polyolefin-based compositions such as polypropylene have many applications, including packaging materials, machine parts, automobile parts, electrical appliance parts, and the like. To enhance impact resistance of polypropylene compositions, elastomeric and/or rubbery impact modifier compositions have been tried. Such impact modifier compositions absorb or dissipate the energy of impact and can be incorporated through polymerization in the reactor or as additives in the compounding step. Impact modifier compositions help to compensate polypropylene for inherent brittleness, embrittlement occurring at sub-zero temperatures, notch-sensitivity, and crack propagation.

To improve the impact resistance of the polypropylene composition while still balancing other desired properties, impact modifiers based on styrenic block copolymers or polyolefin plastomers have been tried. By incorporating rubbery materials or other types of impact modifiers, the impact resistance of polypropylene compositions can be achieved with a reduction in stiffness, flowability, transparency, etc.

There is still a need for improved impact modifier compositions for use in polyolefin compositions to improve impact resistance while maintaining a good balance of other mechanical properties.

**SUMMARY**

In one aspect, the disclosure relates to an impact modifier composition (IMC) comprises, consists essentially of, or consists of (a) 50 to 97 wt.% of a polyolefin plastomer (POP) and (b) 3 to 50 wt.% of at least one block copolymer. The POP has a density of 0.870 to 0.920 $g/cm^3$, measured according to ASTM D1505, a melt flow index at 190°C with 2.16 kg load of 0.5 to 30 g/10 minutes, measured according to ASTM D1238, a melt index ratio (MFI) of 10 to 22, and a long chain branching (LCB) of $< 15$ $LCB/10^6$ carbons. The at least one block copolymer is selected from: (i) a first hydrogenated styrenic block copolymer (first HSBC) having a block A and a block B, (ii) a second hydrogenated styrenic block copolymer (second HSBC) having a block A' and a block B', and (iii) at least one multi-arm block copolymer (MABC). Prior to hydrogenation, each block A and A' is independently a polymer block of a vinyl aromatic monomer, and each block B and B' is a polymer block of a conjugated diene monomer. The first HSBC has a polystyrene content (PSC) of 3 to 20 wt.% and the block B has a vinyl content of 0 to 60 wt.%. The second HSBC has a PSC of 15 to 30 wt.% and a vinyl content of 60 to 90 wt.%. The MABC is selected from (iiia) coupled hydrogenated polyisoprene arms having a general formula I of $(EP)_nX$, (iiib) coupled hydrogenated polybutadiene arms having a general formula II of $(EB)_nX$, and mixtures thereof, X is residue of a coupling agent and $n = 3$ to 10.

In a second aspect, the POP has a LCB in amounts of 0.01 $LCB/10^6$ carbons to 10 $LCB/10^6$ carbons.

In a third aspect, the at least one block copolymer is a first HSBC having a molecular weight ($M_p$) of block A from 1 to 40 kg/mol; a vinyl content of block B from 0 to 50 wt.%; a PSC of 4 to 15 wt.%; and a molecular weight ($M_p$) of the first HSBC from 20 to 300 kg/mol.

In a fourth aspect, the at least one block copolymer is a second HSBC having a molecular weight ($M_p$) of block A' from 1 to 40 kg/mol; a vinyl content of block B' from 70 to 85 wt.%; a PSC of 15 to 25 wt.%; and a molecular weight ($M_p$) of the second HSBC from 20 to 300 kg/mol.

In a fifth aspect, the at least one block copolymer is a MABC having a MFR of 3 to 30 measured at 200°C with 5 kg load according to ASTM D1238; a coupling efficiency of $> 90\%$; a residual unsaturation of 0.01 to 1 meq/g; and a molecular weight ($M_p$) of 300 to 700 kg/mol.

**DESCRIPTION**

The following terms will be used throughout the specification.

"Consisting essentially of" means that the claimed composition primarily contains the specified materials, with allowances for additional components that do not materially affect novel characteristics or function of the claimed invention, with the additional components, if present, in an amount of $< 30\%$, or $< 20\%$, or $< 10\%$.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C. In another example, at least one of A and B means A only, B only, as well as A and B.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Polystyrene content" or PSC of a block copolymer refers to the weight % of polymerized vinyl aromatic monomers, e.g., styrene in the block copolymer, calculated by dividing the sum of molecular weight of all vinyl aromatic units by total molecular weight of the block copolymer. PSC can be determined using any suitable methodology such as proton nuclear magnetic resonance (NMR).

"Vinyl content" refers to the content of a conjugated diene monomer that is polymerized via 1,2-addition in the case of butadiene, or via 3,4-addition in the case of isoprene, resulting in a monosubstituted olefin, or vinyl group, adjacent to the polymer backbone. Vinyl content can be measured by nuclear magnetic resonance spectrometry (NMR).

"Molecular weight" or $M_w$ refers to the polystyrene equivalent molecular weight in kg/mol of a polymer block or a block copolymer. $M_w$ can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. $M_w$ of polymers measured using GPC so calibrated are polystyrene equivalent molecular weights or apparent molecular weights. $M_w$ expressed herein is measured at the peak of the GPC trace and are commonly referred to as polystyrene equivalent "peak molecular weight," designated as $M_p$.

"Bi-modal" molecular weight of a polymer refers to two or more peaks of different molecular weights are readily discernable in a plot of (x) molecular weight as a function of (y) relative proportions of the polymer exhibiting a given molecular weight, such as that obtained by gel permeation chromatography (GPC) analysis of the polymer.

"Alpha-olefin" or "α-olefin" refers to olefins or alkenes with the chemical formula $C_nH_{2n}$, distinguished by having a double bond at the primary or alpha (α) position. Examples of α-olefins include, ethylene, propylene, 1-butene, 1-pentene, etc.

"Long chain branching" or LCB refers to the presence of extended side chains or branches along a polymer backbone, expressed as number of LCBs per 1,000,000 carbons, $LCB/10^6$ carbons, as measured using GPC and/or NMR techniques.

"Short chain branching" or SCB refers to the presence of shorter side chains or branches attached to a polymer backbone. These branches are composed of a smaller number of repeat units compared to the polymer backbone. SCB occurs when a comonomer, e.g., 1-butene, is copolymerized with the main olefin monomer e.g., ethylene. The comonomer units disrupt the regularity of the polymer backbone, introducing branches at relatively regular intervals. The main difference between LCB and SCB is that in LCB, long chain branches consist of multiple repeat units and are relatively longer, e.g., more than a few dozens (> 36) to several thousand repeat units in length. A few here means "3" as a unit. In contrast, in SCB, short chain branches are shorter in length or smaller number of repeat units, e.g., a few to a few dozens, e.g., 2, 5, 10, 20, 30, < 36 of repeat units. The SCB can be measured using GPC-IR method.

"Melt index ratio" or MIR refers to a ratio of melt flow index (MFI) of a polymer measured at 190°C with two different loads, i.e., 21.6 kg and 2.16 kg, calculated as:

$$MIR = (\text{MFI with } 21.6\,\text{kg})/(\text{MFI with } 2.16\,\text{kg}) \quad (I)$$

The disclosure relates to an impact modifier composition (IMC) comprising: (a) a polyolefin plastomer (POP) and (b) at least one block copolymer selected from: (i) a first hydrogenated styrenic block copolymer (first HSBC), (ii) a second hydrogenated styrenic block copolymer, and (iii) a multi-arm block copolymer (MABC). The IMC can be used in polyolefin compositions to improve impact resistance and a good balance of other mechanical properties, e.g., high stiffness, tensile strength, flow properties, etc.

(Polyolefin Plastomers (POPs))

In embodiments, POP is an ethylene copolymer obtained from ethylene and one or more $C_{3-20}$ alpha olefin comonomers and/or di-olefins in a polymerization process.

Example of comonomers include $C_{3-12}$ alpha olefins which are unsubstituted or substituted by up to two $C_{1-6}$ alkyl radicals, $C_{5-12}$ vinyl aromatic monomers which are unsubstituted or substituted by up to two substituents selected from $C_{1-4}$ alkyl radicals, $C_{4-12}$ straight alkyl chain with substitution of a $C_{1-4}$ alkyl radical. Examples of such alpha olefins include propylene, isobutylene, 1-butene, 1-hexene, 1-pentene, 4-methyl-1-pentene, 1-heptene, 1-octene, 1-nonene, 1-decene, 1-dodecene, 1-tetradecene, 1-hexadecene, 1-octadecene, 1-eicosene, and mixtures thereof.

In embodiments, POP comprises comonomer in amounts of 1 - 60, or 10 - 50, or 10 - 45, or 5 - 50, or 10 - 40 wt.%, based on total weight of the POP, remaining being ethylene monomer.

In embodiments, POP is blended with other polymers / copolymers including low density polyethylene (LDPE), a high density polyethylene (HDPE), a linear low density polyethylene (LLDPE), a very low density polyethylene (VLDPE), an ultralow density polyethylene (ULDPE), and mixtures thereof. Such polymers / copolymer can be from 0.1 - 99, or 1 - 50, or 1 - 25, or 10 - 90, or 50 - 99, or 75 - 95 wt.%, based on total weight of the POP.

In embodiments, POP has a density of < 0.920, or < 0.915, or < 0.910, or < 0.905, or 0.870 - 0.920, or 0.875 - 0.915, or 0.880 - 0.910, or 0.870 - 0.910, or 0.870 - 0.905 $g/cm^3$, measured according to ASTM D1505.

In embodiments, POP has a number average molecular weight ($M_n$) of 10 - 150, or 15 - 130, or 20 - 100, or 10 - 80, or 25 - 110 kg/mol.

In embodiments, POP has a weight average molecular weight ($M_w$) of 20 - 200, or 30 - 180, or 35 - 160, or 40 - 150, or 45 - 140, or 20 - 140, or 45 -160 kg/mol.

In embodiments, POP has a polydispersity index (PDI) of 1.5 - 4.5, or 1.8 - 4.2, or 2.0 - 4.0, or 2 - 4.5, or 2.2 - 3.5.

In embodiments, POP comprises two copolymer fractions POP-1 and POP-2 in a certain amount, e.g., 1:10 to 10:1, or 1:5 to 5:1. In embodiments, POP exhibits a bimodal molecular weight distribution and has a weight ratio of weight-average molecular weight of the high molecular weight (HMW) fraction to weight-average molecular weight of the low molecular weight (LMW) fraction ($M_{w-HMW}/M_{w-LMW}$ ratio) from 20 - 60, or 25 - 50, or 30 - 40.

In embodiments, POP has a single, or double, or multiple melting peaks between -30 to 130°C, or -20 to 140°C, or -10 to 130°C, or 0 to 130°C, or 20 to 130°C, measured by DSC according to ASTM D3418.

In embodiments, POP has a melt flow index (MFI) of 0.5 - 30, or 1 - 25, or 0.5 - 20, or 1 - 15, or 1 - 10, or 3 - 12, or 4 - 10 g/10 minutes, at 190°C with 2.16 kg load, measured according to ASTM 1238.

In embodiments, POP has a melt flow index (MFI) of 7 - 900, or 15 - 750, or 7 - 600, or 15 - 450, or 15 - 300, or 20 - 200 g/10 minutes, at 190°C with 21.6 kg load, measured according to ASTM 1238.

In embodiments, POP has a melt index ratio (MIR) of 10 - 22, or 11 - 21, or 12 - 20, or 15 - 20.

In embodiments, POP has a long chain branching (LCB) in amounts of < 15 $LCB/10^6$ carbons, or < 10 $LCB/10^6$ carbons, or < 5 $LCB/10^6$ carbons, or < 3 $LCB/10^6$ carbons, or < 2 $LCB/10^6$ carbons, or 0.01 $LCB/10^6$ carbons to 10 $LCB/10^6$ carbons, or 0.05 $LCB/10^6$ carbons to 5 $LCB/10^6$ carbons, or 0.1 $LCB/10^6$ carbons to 3 $LCB/10^6$ carbons, or 0.01 $LCB/10^6$ carbons to 2 $LCB/10^6$ carbons, or 0.05 $LCB/10^6$ carbons to 1.9 $LCB/10^6$ carbons, or 0.1 $LCB/10^6$ carbons to 1.8 $LCB/10^6$ carbons, or 0.5 $LCB/10^6$ carbons to 2 $LCB/10^6$ carbons, or 0.7 $LCB/10^6$ carbons to 1.7 $LCB/10^6$ carbons, measured according to Janzen-Colby Plot method. The terms "$10^6$ carbons" includes both backbone and branch carbons.

In embodiments, POP has a degree of short chain branching (SCB) of < 15, or < 30, or < 40 wt.%, based on total weight of the POP. Alternatively, POP can have no measurable high density polymer fraction, e.g., there is no fraction having a density of $\geq 0.940$ $g/cm^3$, as determined by a temperature rising elution fractionation (TREF) technique and infrared or 13C nuclear magnetic resonance (NMR) analysis.

In embodiments, POP has a low volatile organic compound (VOC) of < 2, or < 1, or < 0.8, or < 0.5, or < 0.2 wt.%, based on total weight of the POP.

POP can have unimodal, broad unimodal, bimodal, or multimodal profile in a gel permeation chromatography (GPC) curve generated according to the method of ASTM D6474-99. The term "unimodal" means that there is no more than one distinguishable peak in the GPC curve and includes a peak in the GPC curve, where there is one peak. Bimodal GPC traces comprise curves when there is a local extremum between peaks, and the peaks can be separated or deconvoluted. Alternatively, the term "bimodal" connotes the presence of two maxima (which can be equal or can have one local and one global maximum) in a molecular weight distribution curve generated according to the method of ASTM D6474-99. The term "multi-modal" denotes the presence of two or more maxima (again, these maxima likely have a single global maximum, but there could be more than one equal peak) in a molecular weight distribution curve generated according to the method of ASTM D6474-99.

In embodiments, POP is made in a metallocene-catalyzed polymerization process, e.g., gas phase polymerization process. As used herein, the term "metallocene-catalyzed POP, "metallocene-produced POP," or "m-POP" refers to POP having a density and MFI properties described herein and being produced in the presence of a metallocene catalyst. A metallocene-catalyzed POP has measurable properties distinguishable from a POP having the same comonomers in the same weight percentages but produced from a different process, e.g., a conventional Ziegler-Natta polymerization process.

In embodiments, POP is made using a gas-phase, metallocene-catalyzed polymerization process. The gas-phase polymerization refers to polymerization of monomers in a fluidized bed. The POP can be formed by polymerizing alpha-olefins in the presence of a metallocene catalyst under reactive conditions in a gas-phase reactor having the fluidized bed and a fluidizing medium. In embodiments, POP is obtained by polymerization in a single reactor. A variety of gas phase polymerization processes can be used, e.g., polymerization can be conducted in uncondensed or "dry" mode, condensed mode, or "super-condensed mode".

In gas phase polymerization processes, the reactor temperature can be in the range of 30 - 140°C, or 60 - 120°C, or 65 - 110°C, or 70 - 105°C and pressure of 100 - 1000, or 150 - 600, or 200 - 500, or 250 - 400 psig.

Metallocene catalysts can be compounds having a Group 4, 5, or 6 transition metal (M), with a cyclopentadienyl (Cp) ligand or ligands which can be substituted, at least one non-cyclopentadienyl-derived ligand (X), and zero or one heteroatom-containing ligand (Y), the ligands being coordinated to M and corresponding in number to the valence thereof. The metallocene catalyst / precursors generally require activation with a suitable co-catalyst (referred to as an "activator"), in order to yield an "active metallocene catalyst", i.e., an organometallic complex with a vacant coordination site that can coordinate, insert, and polymerize olefins.

In embodiments, POP obtained from the gas-phase polymerization process and using metallocene catalyst is characterized by a narrow composition distribution which relates to the uniformity of distribution of comonomer among the molecules of the polymer. Metallocene catalysts are known to incorporate comonomer very evenly among the polymer molecules they produce. POP produced from the metallocene catalyst system can have a very narrow composition distribution, in that most of the polymer molecules will have roughly the same comonomer content, and within each molecule the comonomer will be randomly distributed.

(Block Copolymers)

The block copolymer is at least one selected from the group consisting of first HSBC, the second HSBC, the MABC, and mixtures thereof.

Each of the first HSBC and the second HSBC is independently obtained by hydrogenation of a SBC precursor, which is any of linear, branched, or radial block copolymer having at least one block A or A', and at least one block B or B'.

In embodiments, a SBC precursor is prepared by anionic polymerization using techniques known in the art. Other methods, such as cationic polymerization, can also be employed. The anionic polymerization initiator is generally an organometallic compound, such as, an organolithium compound, e.g., ethyl-, propyl-, isopropyl-, n-butyl-, sec-butyl-, tert-butyl-, phenyl-, hexylbiphenyl-, hexamethylenedi-, butadieneyl-, isopreneyl-, 1,1-diphenylhexyllithium, or polystyryllithium. An amount of initiator needed is calculated based on the molecular weight to be achieved, generally from 0.002 to 5 wt.%, based on amounts of monomers to be polymerized. Suitable solvent for the polymerization includes aliphatic, cycloaliphatic, or aromatic hydrocarbons having from 4 to 12 carbon atoms, such as pentane, hexane, heptane, cyclopentane, cyclohexane, methylcyclohexane, decalin, isooctane, benzene, alkylbenzenes, such as toluene, xylene or ethylbenzene, and mixtures thereof. Polymer chain termination can be achieved by quenching with a proton donor or a compound having a leaving group that can be displaced by the carbanionic polymer chain.

In embodiments, the SBC precursor has a general configuration of A-B, A-B-A, B-A-B, A-B-A-B, A-B-A-B-A, (A-B)$_n$, (A-B)$_n$(A), (A-B-A)$_n$, (A-B-A)$_n$X, (A-B)$_n$X, (B-A-B)$_n$X, (A-B-A-B)$_n$X, (A-B-A-B-A)$_n$X, A'-B', A'-B'-A', B'-A'-B', A'-B'-A'-B', A'-B'-A'-B'-A', (A'-B')$_n$, (A'-B')$_n$(A'), (A'-B'-A')$_n$, (A'-B'-A')$_n$X, (A'-B')$_n$X, (B'-A'-B')$_n$X, (A'-B'-A'-B')$_n$X, (A'-B'-A'-B'-A')$_n$X, or mixtures thereof; where n is an integer from 2 to 30; and X is residue of a coupling agent. Each block A and A' is same or different and independently derived from a vinyl aromatic monomer, and each block B and B' is same of different and independently derived from a conjugated diene monomer.

In embodiments, the coupling agent includes bi- or polyfunctional compounds, for example divinylbenzene, halides of aliphatic or araliphatic hydrocarbons, such as 1,2-dibromoethane, bis(chloromethyl)benzene, silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane (MTMS), methyltriethoxysilane (MTES), tetramethoxysilane (TMOS), dimethyladipate, gamma-glycidoxypropyltrimethoxy silane, and mixtures thereof.

In embodiments, the vinyl aromatic monomer is selected from the group consisting of styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the conjugated diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, each block A and A', independently, has a molecular weight ($M_p$) of 1 - 40, or 1 - 35, or 1 - 30, or 1 - 25, or 1 - 20, or 1 - 10, or > 1, or > 2, or < 40, or < 35, or < 25 kg/mol.

In embodiments, block B has a vinyl content, prior to hydrogenation, of 0 - 60, or 0 - 50, or 0 - 45, or < 60, or < 50, or < 45 wt.%, based on total weight of the polymerized conjugated diene monomers in the block B.

In embodiments, block B' has a vinyl content, prior to hydrogenation, of 60 - 90, or 65 - 85, or 70 - 85, or 75 - 85, or > 60, or > 65, or > 70 wt.%, based on total weight of the polymerized conjugated diene monomers in the block B'.

In embodiments, each block B and B' independently has a molecular weight ($M_p$) of 10 - 300, or 20 - 200, or 50 - 200, or 20 - 150 kg/mol.

In embodiments, the first HSBC has a polystyrene content (PSC) of 3 - 20, or 5 - 18, or 4 - 15, or > 3, or < 20 wt.%, based on total weight of the first HSBC.

In embodiments, the second HSBC has a polystyrene content (PSC) of 15 - 30, or 17 - 28, or 15 - 25, or > 10, or > 15, or < 30 wt.%, based on total weight of the second HSBC.

In embodiments, each of first HSBC and second HSBC independently has a molecular weight ($M_p$) of 40 - 800, or 50 - 780, or 60 - 760, or 40 - 250, or 50 - 200, or 650 - 800 kg/mol.

In embodiments, the first HSBC has a melt flow rate (MFR) of 5 - 40, or 10 - 35, or 15 - 30, or 15 - 40, or 5 - 30, or > 10, or > 15 dg/minute, measured at 230°C with 5 kg load according to ASTM D 1238.

In embodiments, the second HSBC has a melt flow rate (MFR) of 5 - 40, or 10 - 35, or 15 - 30, or 15 - 40, or 5 - 30, or > 10, or > 15 dg/minute, measured at 230°C with 2.16 kg load according to ASTM D 1238.

In embodiments, each of first HSBC and second HSBC independently has a coupling efficiency (CE) of > 60%, or > 65%, or > 70%, or 60 - 98%, or 70 - 97%.

In embodiments, each of first HSBC and second HSBC independently has a diblock content of < 35, or < 30, or 1 - 35, or 3 - 30 wt.%, based on total weight of the first HSBC and the second HSBC.

In embodiments, each of first HSBC and the second HSBC independently has a density of 0.870 - 0.920, or 0.880 - 0.915, or 0.890 - 0.910, or 0.895 - 0.905 $g/cm^3$.

Each block A and A' derived from the polymerized vinyl aromatic monomer can be essentially left unhydrogenated. In embodiments, each block A and A' independently has a hydrogenation level of < 30, or < 20, or < 10, or < 5%, based on total double bonds present in each block A and A'. In embodiments, each block B and B' is independently hydrogenated to a hydrogenation level of > 80, or > 85, or > 90, or > 95, or > 98, or > 99 or up to 100%, based on total double bonds present in each block B and B'. The hydrogenation level refers to the percentage of original unsaturated bonds which become saturated upon hydrogenation, which can be determined using UV-VIS spectrophotometry and / or proton NMR and / or via ozonolysis titration.

In embodiments, each of first HSBC and the second HSBC independently functionalized with at least one functional group, e.g., a hydroxyl group, an amino group, a carboxyl group, an acid anhydride group, an epoxy group, an isocyanate group, a silanol group, and the like.

(Multi-Arm Block Copolymers (MABCs))

In embodiments, the block copolymer is the MABC selected from coupled hydrogenated polyisoprene arms having a general formula I of $(EP)_nX$, coupled hydrogenated polybutadiene arms having a general formula II of $(EB)_nX$, and mixtures thereof, wherein EP represents polyisoprene unit, and EB represents polybutadiene unit. In each of $(EP)_nX$ and $(EB)_nX$, X is residue of a coupling agent and n = 3 to 10. The MABC is characterized as having no polymerized vinyl aromatic monomer.

The MABC can be prepared by sequential (or successive) polymerization of the isoprene (for $(EP)_nX$ structure) or butadiene (for $(EB)_nX$ structure) monomers in solution in the presence of an initiator / catalyst, with stepwise addition of monomers and initiator, followed by coupling of the resulting polymer with a coupling agent, and lastly, a hydrogenation step.

In embodiments, the MABC is prepared by sequential living anionic polymerization in the presence of an initiator / catalyst, followed by coupling of the resulting polymer with a coupling agent, and lastly, a hydrogenation step.

Process conditions for the sequential polymerization can be similar to those used for anionic polymerizations, e.g., at a temperature of -30°C to 180°C, or 10°C to 150°C, or 30°C to 120°C. The polymerization reaction is carried out in an inert atmosphere, e.g., nitrogen, or under pressure within the range from about 0.5 to 65 bars, for < 12 hrs., or from 5 minutes to 5 hours, depending on factors including temperature, concentration of monomers, molecular weights of each block, etc. Polymerization is carried out in the presence of a suitable amount of solvent(s), e.g., ether, benzene, toluene, xylene, ethylbenzene, cyclohexane, methylcyclohexane, etc. After formation of polymer and after coupling reaction, the polymerization reaction mixture is optionally treated with a proton donor terminating agent, e.g., water, carbon dioxide, hydrogen, alcohol, phenols, or linear saturated aliphatic mono- or di-carboxylic acids, to react with the polymer initiator prior to hydrogenation. The coupling agent can be used as mentioned above. In embodiments, after the sequential polymerization, hydrogenation is performed as discussed above.

In embodiments, the MABC is a block copolymer containing coupled hydrogenated polyisoprene arms having a general formula I of $(EP)_nX$, X being residue of a coupling agent and n = 3 to 10.

In embodiments, the MABC has a MFR of 3 - 30, or 5 - 20, or 7 - 15 g/10 minutes measured at 200°C with 5 kg load, according to ASTM D1238.

In embodiments, the MABC has a CE of > 90%, or > 92%, or > 94%, or 90 - 99% or 92 - 98%.

In embodiments, the MABC has a residual unsaturation (RU) of 0.01 - 1, or 0.02 - 0.8, or 0.04 - 0.5, or 0.01 - 0.1 meq/g.

In embodiments, the MABC has a molecular weight ($M_p$) of 300 - 700, or 350 - 650, or 400 - 650, or 420 - 600 kg/mol.

(Impact Modifier Compositions (IMCs))

The IMC comprises, based on total weight of the composition: (a) 50 - 97 wt.% of the POP, and (b) 3 - 50 wt.% of at least one block copolymer as previous described; alternatively (a) 70 - 95 wt.% of the POP, and (b) 5 - 30 wt.% of the at least one block copolymer.

In embodiments, the IMC comprises a weight ratio of the POP to the at least one block copolymer of 19:1 to 1:1, or 18:2 to 1:1, or 19:1 to 10:1 or 18:2 to 15:1.

(Polyolefin Compositions)

The IMC in embodiments is used in a polyolefin composition in amounts of 5 - 35, or 7 - 22, or 5 - 25, or 10 - 25, or 10 - 22 wt.%, based on total weight of the polyolefin composition.

In embodiments, the polyolefin composition comprises: (A) 50 - 90 wt.% of polyolefin, (B) 5 - 35 wt.% of the IMC, and (C) 5 - 35 wt.% of at least an additive; alternatively (A) 55 - 85 wt.% of polyolefin, (B) 5 - 25 wt.% of the IMC, and (C) 10 - 25 wt.% of at least an additive, based on total weight of the polyolefin composition.

(Polyolefin)

In embodiments, the polyolefin is polypropylene made via any processes known in the art. Polypropylene can be obtained from the virgin or recycled source and can be based on petroleum or bio source when made for the first time.

In embodiments, a polypropylene blend is used in the polyolefin composition, e.g., a blend of polypropylene with a random ethylene or butene copolymer of polypropylene, or a crystalline random copolymer of ethylene and propylene combined with a rubbery ethylene-propylene copolymer. Polypropylene copolymers can be used, including copolymers of propylene with copolymerizable comonomers, e.g., ethylene, 1-butene, 1-pentene, 1-hexene, 1-octene, or one or more conjugated or non-conjugated dienes. The comonomer can be in the range of 0.05 - 40, or 0.5 - 30, or 1 - 20, or 5 - 30 wt.%, based on total weight the polypropylene copolymer.

In embodiments, polypropylene is a heterophasic polymer composition comprising a propylene homopolymer matrix, or random copolymer matrix dispersed therein a propylene copolymer component with one or more ethylene or higher alpha-olefin comonomer(s). The random copolymer matrix comprises propylene monomer and at least one comonomer selected from the group consisting of ethylene, $C_4$-$C_8$ alpha-olefins, e.g., 1-butene, 1-pentene, 4-methyl-1-pentene, 1-hexene, 1-heptene, 1-octene, and mixtures thereof.

Polypropylene can be bimodal or multimodal in view of the molecular weight. In embodiments, polypropylene has a number average molecular weight ($M_n$) of 10 - 200, or 30 - 150, or 50 - 100, or 30 - 120, or 40 - 140 kg/mol. In embodiments, polypropylene has a weight average molecular weight ($M_w$) of 50 - 2000, or 150 - 1500, or 200 - 1000, or 100 - 800, or 150 - 500, or 100 - 400 kg/mol.

In embodiments, polypropylene has a melting temperature ($T_m$) of 100 - 180°C, or 110 - 170°C, or 120 - 160°C, or 125 - 150°C, measured by DSC per ASTM D3418.

In embodiments, polypropylene has a crystallinity of 20 - 70%, or 25 - 65%, or 30 - 60%, or 35 - 55%, or > 35%, or > 40%, or > 50%, measured by DSC heat of fusion, per ASTM D3418.

In embodiments, polypropylene has a melt flow index (MFI) of 5 - 100, or 10 - 50, or 5 -45, or 10 -40 g/10 minutes at 230°C with 2.16 kg load, per ASTM D1238.

In embodiments, polypropylene has a density of 0.870 - 0.910, or 0.875 - 0.905, or 0.895 - 0.905 g/cm$^3$, per ASTM D1505.

In embodiments, polypropylene is used in the polyolefin composition in amounts of 50 - 90, or 55 - 85, or 60 - 75, or 50 - 70, or 60 - 80 wt.%, based on total weight of the polyolefin composition.

(Additives)

The polyolefin composition comprises additives selected from the group consisting of activators, curing agents, stabilizers, neutralizing agents, thickeners, coalescing agents, slip agents, release agents, antimicrobial agents, surfactants, antioxidants, antiozonants, color change pH indicators, plasticizers, tackifiers, film forming additives, dyes, pigments, UV stabilizers, UV absorbers, catalysts, fillers, other resins, fibers, flame retardants, viscosity modifiers, wetting agents, deaerators, toughening agents, adhesion promoters, colorants, heat stabilizers, light stabilizers, lubricants, flow modifiers, drip retardants, antiblocking agents, antistatic agents, processing aids, stress-relief additives, blowing agents, weld line strength promoter, and mixtures thereof.

Examples of fillers include sand, talc, dolomite, calcium carbonate, clay, silica, mica, wollastonite, feldspar, aluminum silicate, alumina, hydrated alumina, glass bead, glass microsphere, ceramic microsphere, thermoplastic microsphere, barite, wood flour, glass fibers, wood fibers, carbon fibers, and mixture thereof. The filler can be surface treated before adding into the polyolefin composition.

In embodiments, additives used in the polyolefin composition range from 5 - 35, or 5 - 30, or 10 - 25, or 10 - 20, or 5 - 20 wt.%, based on total weight of the polyolefin composition.

In embodiments, the polyolefin composition further comprises an impact modifier other than the IMC described above. Examples of other impact modifiers include ethylenepropylene-diene (EPDM) monomer, ethylene-propylene (EPM) monomer, ethylene-propylene rubber (EPR), elastomeric polyolefins (POE), copolymers and terpolymers based on ethylene and propylene, nitrile-butadiene rubber (NBR), isobutylene (IB), chlorinated rubber, chlorinated polyethylene (CM), isoprene, ethylene-butene, mixtures and derivatives thereof. An amount of other impact modifier can be used in the polyolefin composition from 0 - 25, or 1 - 20, or 5 - 20 wt.%, based on total weight of the polyolefin composition.

(Methods of Preparation of IMC)

The IMC can be prepared by using suitable amounts of components and dry blending then mixed directly with other components in polyolefin compositions, or dry blending and melt extruding into pellets for subsequent blending with other components, using known methods and equipment.

(Methods for Processing Impact Modified Polyolefin Compositions / Articles)

Polyolefin composition can be processed according to methods known in the art, with the components combined and blended by melt mixing / extruded into pellets, subsequently forming articles by known techniques, such as injection molding, overmolding, rotomolding, thermoforming, casting, extrusion, profile extrusion, and blow molding.

The polyolefin composition can be compounded by equipment including continuous single or twin-screw mixers. In embodiments, the polyolefin composition is prepared by dry blending process to obtain a dry blended polyolefin composition.

In embodiments, the compounding temperature of components of the polyolefin composition will vary with the polyolefin composition, e.g., 100 - 300°C, or 150 - 280°C, or 180 - 260°C, or 200 - 270°C. Various components of the final polyolefin composition can be added to and compounded with one another in any order, or simultaneously. In some embodiments, the additives are added as a pre-mixed masterbatch. Such masterbatches are commonly formed by dispersing the additives. Masterbatches are conveniently formed by melt compounding methods.

(Properties of Impact Modified Polyolefin Compositions)

The polyolefin composition as modified by the IMC is characterized as having balanced flexibility, impact, stiffness, tensile strength, flow properties, and anisotropy when formed into articles.

In embodiments, the polyolefin composition has an impact strength of 24 - 50, or 25 - 45, or 25 - 40, or > 24 $kJ/m^2$, measured at 23°C according to ISO 179. In embodiments, the polyolefin composition has an impact strength of 20 - 70, or 22 - 65, or 25 - 60, or > 22 $kJ/m^2$, measured at 23°C according to ASTM D256.

In embodiments, the polyolefin composition has an impact strength of 3.2 - 12, or 3.3 - 10, or 3.4 - 8, or > 3.2 $kJ/m^2$, measured at -30°C according to ISO 179. In embodiments, the polyolefin composition has an impact strength of 3.4 - 20, or 3.5 -18, or 3.5 - 15, or > 3.4 $kJ/m^2$, measured at -30°C according to ASTM D256.

In embodiments, the polyolefin composition has a flexural modulus of 900 - 1400, or 930 - 1350, or 950 - 1300, or > 900, or < 1350 MPa, measured at 23°C according to ASTM D790.

In embodiments, the polyolefin composition has a shrinkage rate < 10, or < 9, or < 8, or 3 - 10, or 3.5 - 8 mils/inch (or 1/1000). "Mils per inch" (mils/inch) is a unit of measure to describe the thickness (or size) of a coating or material, or the shrinkage of a film or a thickness over a given length, as how many thousandths of an inch of thickness or shrinkage per inch of length. A "mil" is one-thousandth of an inch (0.001 inch or 0.0254 millimeters). In the context of shrinkage, for example if a plastic film shrinks by 2 mils per inch, it means that for every inch of the film's length, it will shrink by 0.002 inches. For conversion to metric, value in $\mu$m/mm= value in mils/inch×25.4. For example, if the shrinkage is 5 mils/inch, then the metric equivalent is: (5 mils/inch) $\times$ 25.4 = 127 $\mu$m/mm.

In embodiments, the polyolefin composition has a flexural strength of 20 - 40, or 22 - 35, or 20 - 30 Mpa, measured according to ASTM D790.

In embodiments, the polyolefin composition has a crystallization temperature (Tc) of 120 - 140°C, or 122 - 135°C, or 125 - 134°C, or 124 - 132°C.

In embodiments, the polyolefin composition has at least one of the following balanced properties, as compared to a polyolefin composition in absence of the IMC:

(i) > 3% increase in an impact strength measured at 23°C, and (ii) < 2% reduction in an impact strength measured at - 23°C; or

(iii) > 3% increase in an impact strength measured at 23°C, and (iv) > 2% increase in an impact strength measured at - 23°C; or

(v) > 2% increase in a flexural modulus measured at 23°C, and (vi) > 3% increase in an impact strength measured at 23°C; or

(vii) > 2% increase in a flexural modulus measured at 23°C, and (viii) > 2% increase in an impact strength measured at - 23°C.

(Applications of Impact Modified Polyolefin Compositions)

Impact modified polyolefin compositions can be used for making various articles through injection blow molding, injection molding, extrusion blow molding, coextrusion molding, cast film extrusion, blown film extrusion, injection stretch blow molding, rotational molding, thermoforming, thermofusion, foam blow molding, pultrusion, calendaring, additive manufacturing, or other known processing methods.

A hollow article can be obtained from the polyolefin composition by either continuous extrusion blow molding or by intermittent extrusion blow molding. In embodiments, the hollow article includes bottles, containers, fuel tanks, drums, etc. Other molded articles include furniture, signage, wheels, toys, gardening products, and the like.

The polyolefin composition can be used in piping, packaging applications, films, geo-membranes, roofing applications, pond liners, caps, and closures as well as core layers of a multilayer polyolefin sheet or film, containers, and household articles, medical molded bodies, bottles and caps. The polyolefin composition can be used for automotive applications, e.g., interior trim, interior sheathing, door panels, instrument panels, fascia, lift gate, consoles, etc.

In embodiments, the polyolefin composition is used to prepare textile fibers which then used to form spun bond fiber, staple fiber, multi-fiber yarn, knit fabric, woven fabric, or nonwoven fabric.

(Examples)

The following examples are intended to be non-limiting.

The following test methods are used.

Shrinkage rate: plastic material shrinkage occurs in the contraction of a molded part as it cools after injection molding. Shrinkage rate of the plastic material (specimen) can be expressed as thousandths of an inch per linear inch (0.00X / inch / inch) and calculated as:

$$Shrinkage\ rate = \frac{Cavity\ dimention - Specimen\ dimension}{Cavity\ dimention} \quad (II)$$

Crystallization temperature (Tc): Tc was measured using differential scanning calorimetry (DSC) in the cooling mode. The sample was cooled after initial heating from 200°C to - 90 °C at a rate of 10°C/minute. The temperature corresponding to the peak in the DSC curve is denoted as the (Tc).

The components used in examples include:

POP-1 is an ethylene-butene copolymer having MFI of 5 g/10 minutes at 190°C with 2.16 kg load, MFI of 85 g/10 minutes at 190°C with 21.6 kg load, melt index ratio of 17, density of 0.900 g/cm$^3$, and 0.9 LCB/10$^6$ carbons.

POP-2 is an ethylene-butene copolymer having MFI of 5 g/10 minutes at 190°C with 2.16 kg load, MFI of 85 g/10 minutes at 190°C with 21.6 kg load, melt index ratio of 17, density of 0.885 g/cm$^3$, and 1.3 LCB/10$^6$ carbons.

POP-3 is an ethylene-hexene copolymer having MFI of 5 g/10 minutes at 190°C with 2.16 kg load, MFI of 90 g/10 minutes at 190°C with 21.6 kg load, melt index ratio of 18, density of 0.900 g/cm$^3$, and 1.1 LCB/10$^6$ carbons.

POP-4 is an ethylene-hexene copolymer having MFI of 5 g/10 minutes at 190°C with 2.16 kg load, MFI of 90 g/10 minutes at 190°C with 21.6 kg load, melt index ratio of 18, density of 0.885 g/cm$^3$, and 1.5 LCB/10$^6$ carbons.

First HSBC-1 is a poly(styrene-ethylene/butylene-styrene) (S-E/B-S) copolymer having MFR of 22 g/10 minutes at 230°C with 5 kg load, density of 0.890 g/cm$^3$, PSC of 13 wt.%, vinyl content of 44 wt.%, CE of 71%, molecular weight of polystyrene block ($M_p$) of 5.3 kg/mol, molecular weight overall first HSBC-1 ($M_p$) of 145 kg/mol, and diblock content of 29 wt.%.

First HSBC-2 a poly(styrene-ethylene/propylene) (S-EP) block copolymer, density of 0.900 g/cm$^3$, PSC of about 5.5 wt.%, CE of 95%, molecular weight of polystyrene block ($M_p$) of 3.5 kg/mol, molecular weight overall first HSBC-2 ($M_p$) of 750 kg/mol, and diblock content of 5 wt.%.

First HSBC-3 is a poly(styrene-ethylene/propylene-ethylene/butylene) (S-EP/EB) block copolymer having density of 0.900 g/cm$^3$, PSC of 7 wt.%, CE of 95%, molecular weight of polystyrene block ($M_p$) of 2.9 kg/mol, and molecular weight overall first HSBC-3 ($M_p$) of 74.5 kg/mol.

Second HSBC-1 is a poly(styrene-ethylene/butylene-styrene) (S-E/B-S) copolymer having MFR of 19 g/10 minutes at 230°C with 2.16 kg load, density of 0.900 g/cm$^3$, PSC of 18.6 wt.%, vinyl content of 79 wt.%, CE of 93%, molecular weight of polystyrene block (M$_p$) of 6.2 kg/mol, molecular weight overall Second HSBC-1 (M$_p$) of 123 kg/mol, and diblock content of 7 wt.%.

MABC-1 is a multi-arm block copolymer having coupled hydrogenated polyisoprene arms (EP) having MFR of 8 g/10 minutes at 200°C with 5 kg load, density of 0.900 g/cm$^3$, CE of 95%, molecular weight overall MABC-1 (M$_p$) of 488 kg/mol, diblock content of 5 wt.%, and RU of 0.05 meq/g.

PP-1 is polypropylene having MFI of 32 g/10 min at 230°C with 2.16 kg load, and density of 0.900 g/cm$^3$.

IMC-A is an ethylene-octene copolymer having MFI at 190°C with 2.16 kg load of 5 g/10 min, density of 0.868 g/cm$^3$, melt index ratio of 30, and 2.1 LCB/10$^6$ carbons.

IMC-B is an ethylene-butene copolymer having MFI at 190°C with 2.16 kg load of 5 g/10 min, density of 0.865 g/cm$^3$, melt index ratio of 33, and 3.5 LCB/10$^6$ carbons.

AO-1 is a phenolic anti-oxidant (tetrakis[methylene-3-(3,5-di-tert-butyl-4-hydroxyphenyl)propionate] methane).

AO-2 is a phosphite anti-oxidant (tris(2,4-di-tert-butylphenyl) phosphite).

AO-3 is Irganox 1010 from BASF.

(Example 1)

Preparation of impact modifier compositions. The HSBC and the POP was blended by using twin-screw extruder at 170°C in varying amounts of each HSBC or MABC and POP as shown in table 1.

Table 1

| Examples | IMC-1 | IMC-2 | IMC-3 | IMC-4 | IMC-5 | IMC-6 | IMC-7 | IMC-8 | IMC-9 | IMC-10 | IMC-11 | IMC-12 | IMC-13 | IMC-14 |
|---|---|---|---|---|---|---|---|---|---|---|---|---|---|---|
| POP-1 (wt.%) | 80 | - | - | - | - | - | - | - | - | - | - | - | - | - |
| POP-2 (wt.%) | - | 95 | 90 | 85 | 85 | - | - | - | - | - | - | - | - | - |
| POP-3 (wt.%) | - | - | - | - | - | 80 | 80 | 80 | 80 | - | - | - | - | - |
| POP-4 (wt.%) | - | - | - | - | - | - | - | - | - | 90 | 90 | 90 | 90 | 90 |
| First HSBC-1 (wt.%) | 20 | 5 | 10 | 15 | 20 | 20 | - | - | - | 10 | - | 10 | - | - |
| First HSBC-2 (wt.%) | - | - | - | - | - | - | 20 | - | - | - | - | - | - | - |
| First HSBC-3 (wt.%) | - | - | - | - | - | - | - | 20 | - | - | 10 | - | 10 | - |
| Second HSBC-1 (wt.%) | - | - | - | - | - | - | - | - | 20 | - | - | - | - | - |
| MABC-1 (wt.%) | - | - | - | - | - | - | - | - | - | - | - | - | - | 10 |

(Example 2)

Preparation of polyolefin compositions. Components of the polyolefin composition in suitable amounts were blended by using twin-screw extruder at 210°C to obtain polyolefin compositions in pellet form. Specimens of polyolefin compositions were then prepared by injection molding at a temperature of 230°C and mold temperature of 40°C. These specimens were used for measurement of various properties. Details of polyolefin compositions and test results are shown in tables 2 and 3, respectively.

Table 2

| | Ex.2a | Ex.2b | Ex.2c | Ex.2d | Ex.2e | Ex.2f | Ex.2g | Ex.2h | Ex.2i | Ex.2j | Ex.2k | Ex.2l | Ex.2m | Ex.2n | Ex.2o | Ex.2p |
|---|---|---|---|---|---|---|---|---|---|---|---|---|---|---|---|---|
| PP-1 (wt.%) | 59.85 | 59.85 | 59.85 | 59.85 | 59.85 | 59.85 | 59.85 | 64.9 | 64.9 | 64.9 | 64.9 | 64.9 | 64.9 | 64.9 | 64.9 | 64.9 |
| IMC-A (wt.%) | 20 | - | - | - | - | - | - | - | - | - | - | - | - | - | - | - |
| IMC-B (wt.%) | - | 20 | - | - | - | - | - | - | - | - | - | - | - | - | - | - |
| IMC-1 (wt.%) | - | - | 20 | - | - | - | - | - | - | - | - | - | - | - | - | - |
| IMC-2 (wt.%) | - | - | - | 20 | - | - | - | - | - | - | - | - | - | - | - | - |
| IMC-3 (wt.%) | - | - | - | - | 20 | - | - | - | - | - | - | - | - | - | - | - |
| IMC-4 (wt.%) | - | - | - | - | - | 20 | - | - | - | - | - | - | - | - | - | - |
| IMC-5 (wt.%) | - | - | - | - | - | - | 20 | - | - | - | - | - | - | - | - | - |
| IMC-6 (wt.%) | - | - | - | - | - | - | - | 20 | - | - | - | - | - | - | - | - |
| IMC-7 (wt.%) | - | - | - | - | - | - | - | - | 20 | - | - | - | - | - | - | - |
| IMC-8 (wt.%) | - | - | - | - | - | - | - | - | - | 20 | - | - | - | - | - | - |
| IMC-9 (wt.%) | - | - | - | - | - | - | - | - | - | - | 20 | - | - | - | - | - |
| IMC-10 (wt.%) | - | - | - | - | - | - | - | - | - | - | - | 20 | - | - | - | - |
| IMC-11 (wt.%) | - | - | - | - | - | - | - | - | - | - | - | - | 20 | - | - | - |
| IMC-12 (wt.%) | - | - | - | - | - | - | - | - | - | - | - | - | - | 20 | - | - |
| IMC-13 (wt.%) | - | - | - | - | - | - | - | - | - | - | - | - | - | - | 20 | - |
| IMC-14 (wt.%) | - | - | - | - | - | - | - | - | - | - | - | - | - | - | - | 20 |
| Talc (wt.%) | - | - | - | - | - | - | - | 15 | 15 | 15 | 15 | 15 | 15 | 15 | 15 | 15 |
| AO-1 (wt.%) | 0.05 | 0.05 | 0.05 | 0.05 | 0.05 | 0.05 | 0.05 | - | - | - | - | - | - | - | - | - |
| AO-2 (wt.%) | 0.1 | 0.1 | 0.1 | 0.1 | 0.1 | 0.1 | 0.1 | - | - | - | - | - | - | - | - | - |
| AO-3 (wt.%) | - | - | - | - | - | - | - | 0.1 | 0.1 | 0.1 | 0.1 | 0.1 | 0.1 | 0.1 | 0.1 | 0.1 |

Table 3

| | Ex.2a | Ex.2b | Ex.2c | Ex.2d | Ex.2e | Ex.2f | Ex.2g | Ex.2h | Ex.2i | Ex.2j | Ex.2k | Ex.2l | Ex.2m | Ex.2n | Ex.2o | Ex.2p |
|---|---|---|---|---|---|---|---|---|---|---|---|---|---|---|---|---|
| Impact Strength (23°C) kJ/m² | 28 | 25 | 28 | 24 | 29 | 30 | 32 | 58 | 50 | 56 | 54 | 22 | 20 | 31 | 32 | 31 |
| Impact Strength (-30°C) kJ/m² | 3.4 | 3.4 | 3.4 | 3.2 | 3.5 | 3.5 | 3.8 | 7.8 | 6.0 | 8.4 | 6.9 | 3.6 | 3.4 | 5.3 | 5.1 | 5.0 |
| Flexural Modulus (MPa) (23°C) | 1010 | 980 | 1180 | 1200 | 1040 | 1010 | 980 | 996 | 962 | 1150 | 1090 | - | - | 1070 | 1140 | 1210 |
| Shrinkage Rate 1/1000 | 6.27 | 6.35 | 7.2 | 6.82 | 6.95 | 6.98 | 7.03 | 6.70 | 7.09 | 6.23 | 6.46 | 6.55 | 6.01 | 6.70 | 6.70 | 6.70 |
| Flexural strength (MPa) | - | - | - | - | - | - | - | 25 | 24 | 26 | 25 | 22 | 24 | 25 | 25 | 26 |
| DSC cooling curve Tc (°C) | - | - | - | - | - | - | - | 129 | 130 | 130 | 130 | - | - | 129 | 131 | 131 |

As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

**Claims**

1. An impact modifier composition comprising:

    (a) 50 to 97 wt.% of a polyolefin plastomer having:

    a density of 0.870 to 0.920 $g/cm^3$, measured according to ASTM D1505,
    a melt flow index at 190°C with 2.16 kg load of 0.5 to 30 g/10 minutes, measured according to ASTM D1238,
    a melt index ratio of 10 to 22, and
    a long chain branching of < 15 $LCB/10^6$ carbons; and

    (b) 3 to 50 wt.% of at least one block copolymer selected from:

    (i) a first hydrogenated styrenic block copolymer having a block A and a block B, wherein prior to hydrogenation:

    each block A is a polymer block of a vinyl aromatic monomer, and
    each block B is a polymer block of a conjugated diene monomer, wherein the block B has a vinyl content of 0 to 60 wt.%,

    wherein the first hydrogenated styrenic block copolymer has a polystyrene content of 3 to 20 wt.%,
    (ii) a second hydrogenated styrenic block copolymer having a block A' and a block B', wherein prior to hydrogenation:

    each block A' is a polymer block of a vinyl aromatic monomer, and
    each block B' is a polymer block of a conjugated diene monomer, wherein the block B' has a vinyl content of 60 to 90 wt.%,

    wherein the second hydrogenated styrenic block copolymer has a polystyrene content of 15 to 30 wt.%, and
    (iii) at least one multi-arm block copolymer selected from:

    (iiia) coupled hydrogenated polyisoprene arms having a general formula I of $(EP)_nX$, and
    (iiib) coupled hydrogenated polybutadiene arms having a general formula II of $(EB)_nX$,
    wherein X is residue of a coupling agent and n = 3 to 10.

2. The impact modifier composition of claim 1, wherein the polyolefin plastomer has a long chain branching (LCB) in amounts of 0.01 $LCB/10^6$ carbons to 10 $LCB/10^6$ carbons.

3. The impact modifier composition of any of claims 1-2, wherein the at least one block copolymer is a first hydrogenated styrenic block copolymer having:

    a molecular weight $(M_p)$ of block A from 1 to 40 kg/mol;
    a vinyl content of block B from 0 to 50 wt.%;
    a polystyrene content of 4 to 15 wt.%; and
    a molecular weight $(M_p)$ of the first hydrogenated styrenic block copolymer from 20 to 300 kg/mol.

4. The impact modifier composition of any of claims 1-2, wherein the at least one block copolymer is a second hydrogenated styrenic block copolymer having:

    a molecular weight $(M_p)$ of block A' from 1 to 40 kg/mol;
    a vinyl content of block B' from 70 to 85 wt.%;
    a polystyrene content of 15 to 25 wt.%; and
    a molecular weight $(M_p)$ of the second hydrogenated styrenic block copolymer from 20 to 300 kg/mol.

5. The impact modifier composition of any of claims 14, wherein a weight ratio of the polyolefin plastomer to the at least one block copolymer is from 19:1 to 10:1.

6. The impact modifier composition of any of claims 1-2, wherein the at least one block copolymer is a multi-arm block copolymer having:

a melt flow rate of 3 to 30 measured at 200°C with 5 kg load according to ASTM D1238;
a coupling efficiency of > 90%;
a residual unsaturation of 0.01 to 1 meq/g; and
a molecular weight ($M_p$) of 300 to 700 kg/mol.

7. The impact modifier composition of any of claims 1-6, wherein the polyolefin plastomer has at least one of:

a density of 0.880 to 0.910 g/cm$^3$;
a melt flow index of 0.5 to 20 g/10 minutes; and
a melt index ratio 12 to 20.

8. The impact modifier composition of any of claims 1-7, wherein the polyolefin plastomer is an ethylene copolymer obtained from ethylene and one or more $C_{3-20}$ alpha olefin comonomers.

9. The impact modifier composition of any of claims 1-8, wherein the polyolefin plastomer is at least one selected from the group consisting of an ethylene-butene copolymer, an ethylene-hexene copolymer, and mixtures thereof.

10. A polyolefin composition comprising:

(A) 50 to 90 wt.% of polyolefin;
(B) 5 to 35 wt.% of the impact modifier composition of any of claims 1-9; and
(C) 5 to 35 wt.% of at least an additive, based on total weight of the polyolefin composition.

11. The polyolefin composition of claim 10, wherein the polyolefin composition when compared to a polyolefin composition in absence of the impact modifier composition, has at least one of:

(i) > 3% increase in an impact strength measured at 23°C, and (ii) < 2% reduction in an impact strength measured at - 23°C; or
(iii) > 3% increase in an impact strength measured at 23°C, and (iv) > 2% increase in an impact strength measured at - 23°C; or
(v) > 2% increase in a flexural modulus measured at 23°C, and (vi) > 3% increase in an impact strength measured at 23°C; or
(vii) > 2% increase in a flexural modulus measured at 23°C, and (viii) > 2% increase in an impact strength measured at - 23°C,

wherein

the impact strength is measured according to ISO 179; and
the flexural modulus is measured according to ASTM D790.

12. The polyolefin composition of any of claims 10-11, wherein polyolefin is polypropylene.

13. The polyolefin composition of claim 12, wherein polypropylene has at least one of:

a melt flow index of 5 to 100 g/10 minutes at 230°C with 2.16 kg load, measured according to ASTM D1238; and
a density of 0.870 to 0.910 g/cm$^3$, measured according to ASTM D1505.

14. The polyolefin composition of any of claims 10-13, wherein the polyolefin composition has at least one of

an impact strength of 24 to 50 kJ/m$^2$, measured at 23°C according to ISO 179;
an impact strength of 3.2 to 12 kJ/m$^2$, measured at -30°C according to ISO 179;
a flexural modulus of 900 to 1400 MPa, measured according to ASTM D790; and
a flexural strength of 20 to 40 MPa, measured according to ASTM D790.

15. The polyolefin composition of any of claims 10-14, wherein the polyolefin composition has a shrinkage rate of < 10 mils/inch.

Europäisches
Patentamt

European
Patent Office

Office européen
des brevets

## EUROPEAN SEARCH REPORT

Application Number

EP 24 18 4194

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 190 831 A1 (KURARAY CO [JP]) 7 June 2023 (2023-06-07) * claims; examples 1-2 * | 1-15 | INV. C08L23/08 C08L53/02 C08L23/10 |
| X | WO 2018/153229 A1 (KINGFA SCIENCE & TECHNOLOGY CO [CN]) 30 August 2018 (2018-08-30) * claims; examples * | 1-15 | |
| X | EP 0 881 259 A2 (MITSUI CHEMICALS INC [JP]; GRAND POLYMER CO LTD [JP] ET AL.) 2 December 1998 (1998-12-02) * claims; example 4 * | 1-15 | |
| L | US 10 465 025 B2 (EXXONMOBIL CHEMICAL PATENTS INC [US]) 5 November 2019 (2019-11-05) * table 5 * | 1-15 | |

TECHNICAL FIELDS SEARCHED (IPC)

C08L

The present search report has been drawn up for all claims

| Place of search | Date of completion of the search | Examiner |
|---|---|---|
| Munich | 6 November 2024 | Degrendel, Magali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 4194

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2024

| Patent document cited in search report | | Publication date | Patent family member(s) | | Publication date |
|---|---|---|---|---|---|
| EP 4190831 | A1 | 07-06-2023 | CN 116157435 A | | 23-05-2023 |
| | | | EP 4190831 A1 | | 07-06-2023 |
| | | | JP WO2022025177 A1 | | 03-02-2022 |
| | | | TW 202212391 A | | 01-04-2022 |
| | | | US 2023265271 A1 | | 24-08-2023 |
| | | | WO 2022025177 A1 | | 03-02-2022 |
| WO 2018153229 | A1 | 30-08-2018 | CN 107841050 A | | 27-03-2018 |
| | | | WO 2018153229 A1 | | 30-08-2018 |
| EP 0881259 | A2 | 02-12-1998 | AU 712107 B2 | | 28-10-1999 |
| | | | EP 0881259 A2 | | 02-12-1998 |
| | | | JP 3683409 B2 | | 17-08-2005 |
| | | | JP H1143565 A | | 16-02-1999 |
| US 10465025 | B2 | 05-11-2019 | NONE | | |

EPO FORM P0459

For more details about this annex : see Official Journal of the European Patent Office, No. 12/82